# EUROPÄISCHE PATENTSCHRIFT

(11) **EP 0 633 158 B1**
(45) Veröffentlichungstag und Bekanntmachung des Hinweises auf die Patenterteilung: **13.11.1996**
(21) Anmeldenummer: 94109549.9
(22) Anmeldetag: 21.06.1994
(51) Int. Cl.: B60L 11/18, B60L 3/00, H01M 8/04

(54) **Vorrichtung und Verfahren zum Starten eines Brennstoffzellen-Fahrzeugs**
Apparatus and method for starting a vehicle with fuel cells
Appareil et méthode pour démarrer un véhicule avec piles à combustible

(30) Priorität: 08.07.1993 DE 4322767
(43) Veröffentlichungstag der Anmeldung: 11.01.1995
(73) Patentinhaber: DAIMLER-BENZ AKTIENGESELLSCHAFT, 70567 Stuttgart (DE)
(72) Erfinder: Lorenz, Helmut, D-72669 Unterensingen (DE); Noreikat, Karl-Ernst, D-73733 Esslingen (DE); Klaiber, Thomas, D-71384 Weinstadt (DE); Fleck, Wolfram, D-89155 Erbach (DE); Sonntag, Josef, D-89257 Illertissen (DE); Hornburg, Gerald, D-89275 Elchingen (DE); Gaulhofer, Andreas, D-88682 Salem (DE)

(56) Entgegenhaltungen:
- WO-A-91/19328
- US-A- 4 081 693
- US-A- 4 923 768
- IEEE TRANSACTIONS ON POWER APPARATUS AND SYSTEMS, Bd. PAS-88, Nr. 2, Februar 1969, Seiten 86-93; P. AGARWAL : 'The High Performance Induction Motor Drive System'
- PATENT ABSTRACTS OF JAPAN vol. 13, no. 46 (E-711) (3394) 2. Februar 1989 & JP-A-63 241 876

## Beschreibung

Die Erfindung betrifft eine Vorrichtung und ein Verfahren zum Starten eines Fahrzeugs mit einem durch Brennstoffzellen gespeisten Antrieb gemäß dem Oberbegriff der Patentansprüche 1 beziehungsweise 2.

Aus einem Artikel von P. Agarwal in IEEE Transactions On Power Apparatus And Systems, 88 (1969) 2, S. 86-93 ist ein Fahrzeug bekannt, das von einem Elektromotor, der mit Hilfe von Brennstoffzellen mit elektrischer Energie versorgt wird, angetrieben wird.

Die Aufgabe der Erfindung besteht darin, eine Vorrichtung und ein Verfahren zur Inbetriebnahme eines solchen Fahrzeugs mit Brennstoffzellen zu schaffen.

Die Aufgabe wird durch die kennzeichnenden Merkmale des Patentanspruchs 1 beziehungsweise 2 gelöst.

Durch die Verwendung eines Anlassermotors, der von einer 12V-Starterbatterie angetrieben wird, kann auf eine Pufferbatterie, die relativ schwer und teuer ist, verzichtet werden.

Bei Fahrzeugen, in denen Brennstoffzellen zur Erzeugung von elektrischer Energie eingesetzt werden, müssen besondere Sicherheitsvorkehrungen getroffen werden. Insbesondere bei Brennstoffzellen, die mit Wasserstoffgas betrieben werden, muß das gesamte System vor und während des Betriebs auf unkontrolliertes Austreten des Arbeitsgases überprüft werden. Um einen Defekt der Brennstoffzelle zu verhindern muß außerdem gewährleistet sein, daß die Antriebseinheit erst nach Erreichen der Mindestleistung der Brennstoffzelle freigegeben wird.

Das erfindungsgemäße Verfahren bietet den Vorteil, daß die einzelnen Verfahrensschritte nur schrittweise freigegeben werden. Wird bei der Sicherheitsabfrage ein Defekt erkannt, so werden alle weiteren Schritte unterbunden. Wird dagegen die Sicherheitsabfrage fehlerfrei durchlaufen, so wird im nächsten Schritt die Startprozedur gestartet. Erst wenn auch dieser Schritt ohne Störung beendet ist, das heißt wenn die Mindestleistung der Brennstoffzelle erreicht ist, wird die Antriebseinheit freigegeben. Somit kann sowohl eine Gefährdung der Umwelt durch austretendes Wasserstoffgas als auch eine Beschädigung der Brennstoffzellen durch Überlastung verhindert werden.

Weitere Vorteile und Ausgestaltungen gehen aus den Unteransprüchen und der Beschreibung hervor.

Die Erfindung ist nachstehend anhand einer Zeichnung näher beschrieben, wobei
- Fig. 1: eine Prinzipdarstellung eines in einem Fahrzeug angeordneten Brennstoffzellen-Systems,
- Fig. 2: einen Ablaufplan eines erfindungsgemäßen Verfahrens zum Starten eines Fahrzeugs, das von einer elektrischen Antriebseinheit, die von einer Brennstoffzelle mit elektrischer Energie versorgt wird, angetrieben wird,
- Fig. 3: ein Ausführungsbeispiel für die Sicherheitsabfrage aus Fig. 2 und
- Fig. 4: ein Ausführungsbeispiel für eine Brennstoffzellen-Startprozedur aus Fig. 2

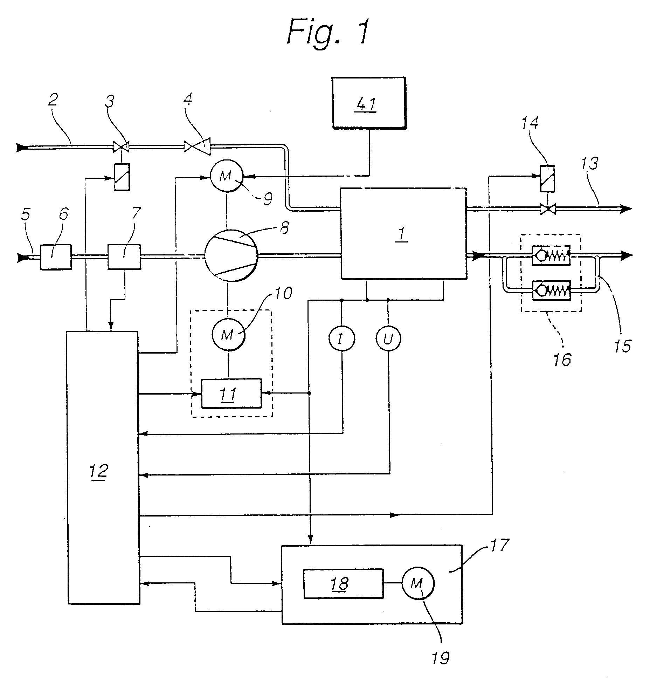

Der in Fig. 1 insgesamt mit 1 bezeichneten Brennstoffzelle wird über eine erste Zuleitung 2, in der ein Ventil 3 und ein Druckregler 4 angeordnet sind, ein Brennmittel, beispielsweise Wasserstoffgas, zugeführt. Über eine zweite Zuleitung 5, in der ein Luftfilter 6, ein Luftmassenmesser 7 und ein Kompressor 8 angeordnet sind, wird der Brennstoffzelle 1 außerdem ein Oxydant, vorzugsweise Umgebungsluft, zugeführt. In der Brennstoffzelle 1 wird der Brennstoff an der Anode oxydiert, das Oxydant wird an der Kathode reduziert. Bei dieser elektrochemischen Reaktion entsteht zwischen den beiden Elektroden eine Spannung. Durch Parallel- beziehungsweise Hintereinanderschaltung vieler solcher Zellen zu einem sogenannten Stack können Spannungen und Stromstärken erreicht werden, die zum Antrieb eines Fahrzeugs ausreichen.

Zum Antrieb des Kompressors 8 ist ein Anlassermotor 9 und ein Elektromotor 10 vorgesehen. Für die Inbetriebnahme wird der Brennstoffzelle 1 über den Kompressor 8 soviel Luftmasse zugeführt, daß sie eine vorgegebene Leerlaufleistung pₘᵢₙ erzeugen kann. Während dieser Startphase wird der Kompressor 8 über den Anlassermotor 9, der mit einer 12V-Starterbatterie 41 verbunden ist, angetrieben. Auf eine sonst übliche Pufferbatterie kann verzichtet werden. Sobald die Leerlaufleistung pₘᵢₙ erreicht ist, wird der Elektromotor 10, der von der Brennstoffzelle 1 mit Spannung versorgt wird, zugeschaltet und der Anlassermotor 9 abgetrennt. Die Startphase ist zu diesem Zeitpunkt beendet; die Brennstoffzelle läuft jetzt im Leerlauf.

Im Normalbetrieb der Brennstoffzelle 1 kann mit Hilfe eines Stromstellers 11, der von einer Steuereinheit 12 angesteuert wird, die Drehzahl n des Elektromotors 10 und somit auch des Kompressors 8 geregelt werden. Über die Drehzahl n des Kompressors 8 kann der Oxydant-Massenstrom *ṁ*_{*ist*} und damit die Leistung p_{BZ} der Brennstoffzelle 1 beeinflußt werden.

Das Abführen der Luft aus der Brennstoffzelle 1 erfolgt über eine erste Abström-Leitung 15. In dieser ersten Abström-Leitung 15 ist ein Druckregelventil 16 angeordnet, mit dessen Hilfe in der Brennstoffzelle 1 ein konstanter Betriebsdruck p aufrechterhalten wird. Um eventuelle Ablagerungen oder Verunreinigungen des Wasserstoffgases aus der Brennstoffzelle 1 entfernen zu können ist eine zweite Abström-Leitung 13, in der ein sogenanntes Purge-Ventil 14 angeordnet ist, vorgesehen. Zum Antrieb des Fahrzeugs ist eine Antriebseinheit 17, bestehend aus einem zweiten Stromsteller 18 und einem Elektromotor 19, vorgesehen.

Die Steuereinheit 12 erhält über elektrische Leitungen Informationen über den momentanen Istwert *ṁ*_{*ist*} des Luftmassenstroms, den Betriebszustand der Antriebseinheit und über die von der Brennstoffzelle 1 erzeugte Spannung U und den entsprechenden Strom I. Diese Informationen werden in der Steuereinheit 12 verarbeitet und daraus Stellsignale für die Stromsteller 11 und 18, die Ventile 3 und 14 und den Anlassermotor 9 erzeugt, die wiederum über entsprechende Leitungen an die einzelnen Komponenten übermittelt werden.

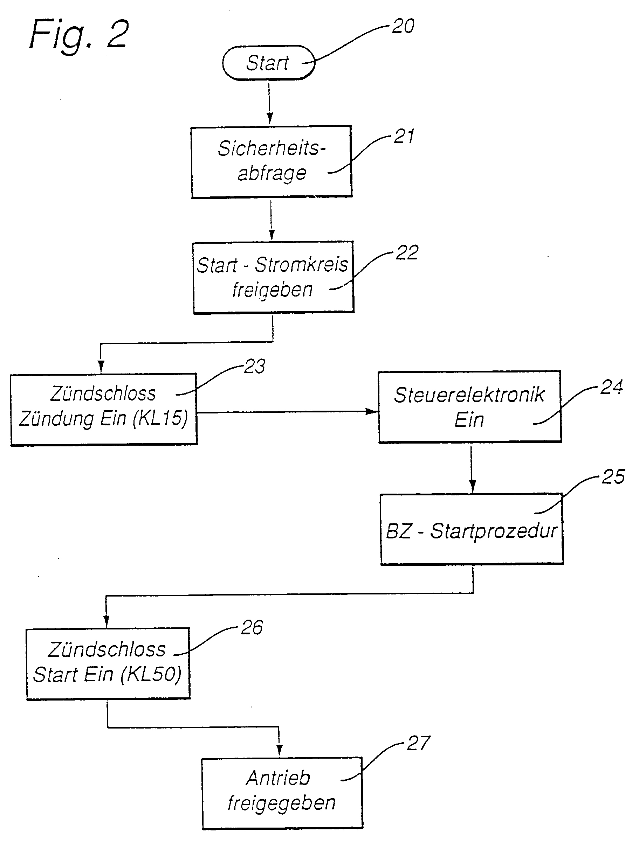

Das in Fig. 2 beschriebene Verfahren wird in Block 20 gestartet. Dies erfolgt beispielsweise durch Drücken eines Knopfes, durch das Einführen des Zündschlüssel oder dann, wenn ein Sitzsensor erkennt, daß der Fahrersitz belegt ist. Vorzugsweise wird das Verfahren jedoch dann gestartet, wenn in Block 20 erkannt wird, daß eine Tür des Fahrzeugs, insbesondere die Fahrertür, geöffnet wird. Dies ist nämlich der frühestmögliche Zeitpunkt, zu dem ein bevorstehender Start des Fahrzeugs und somit der Brennstoffzelle 1 erkannt werden kann. Es wird dann in Block 21 eine Sicherheitsabfrage aktiviert. Zu diesem Zeitpunkt sind sowohl der Haupt- als auch der 12 V-Start-Stromkreis unterbrochen. Erst nach erfolgreicher Beendigung der Sicherheitsabfrage 21 wird in Block 22 der Start-Stromkreis freigegeben. Der Fahrer kann dann in Block 23 durch Drehen des Zündschlüssels auf die Position Zündung die Steuerelektronik in Block 24 aktivieren und anschließend die Brennstoffzellen-Startprozedur 25 starten. Nach dem Ende der Brennstoffzellen-Startprozedur 25 läuft die Brennstoffzelle 1 mit einer vorgegebenen Leerlaufleistung pₘᵢₙ.

Zu diesem Zeitpunkt kann der Fahrer dann durch Drehen des Zündschlüssels auf die Position Start den Hauptstromkreis und somit den Antrieb des Fahrzeugs freigeben. Um zu verhindern, daß der Fahrzeugantrieb vor dem Durchlaufen der Brennstoffzellen-Startprozedur freigegeben wird, kann vorgesehen werden, daß entweder das Zündschloß blockiert wird, so daß erst zu den vorgegebenen Zeitpunkten ein Weiterdrehen des Zündschlüssel möglich wird, oder daß das Weiterdrehen des Zündschlüssel zwar jederzeit möglich ist, die Klemmen 15 und 50 jedoch erst zu den vorgegebenen Zeitpunkten aktiviert werden.

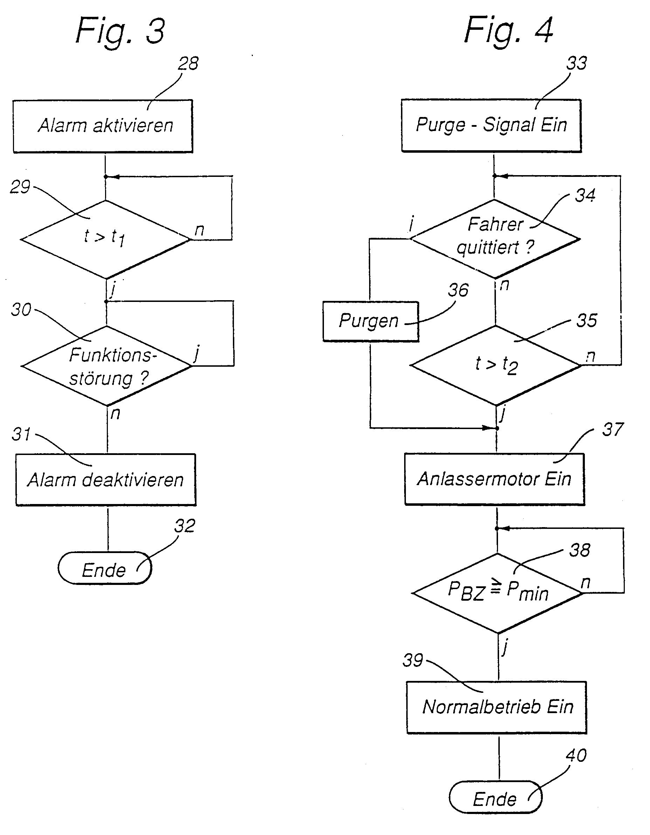

In Fig. 3 ist ein Ausführungsbeispiel für eine Sicherheitsabfrage gemäß Fig. 2 dargestellt. Mit Hilfe der Sicherheitsabfrage soll vor der Inbetriebnahme der Brennstoffzelle 1 festgestellt werden, ob sich die gesamte Anlage in einem funktionstüchtigen und sicheren Betriebszustand befindet. Hierzu wird beispielsweise überprüft, ob an irgendeiner Stelle der Anlage Betriebsmittel, beispielsweise Wasserstoffgas, unkontrolliert austritt. Falls eine solche Funktionsstörung vorliegt, wird der Startvorgang der Brennstoffzelle unterbunden. Hierzu wird zu Beginn der Sicherheitsabfrage 21 in Block 28 ein Alarmsignal aktiviert. Gleichzeitig wird ein Warnton und/oder eine Warnlampe eingeschaltet und der 12 V-Start-Stromkreis gesperrt. Die zur Überwachung der Betriebsmittel eingesetzten Gassensoren werden aber dennoch mit Spannung versorgt. In Block 29 wird dann die Sicherheitsabfrage 21 für eine vorgegebene Zeitdauer t1, die zum Vorwärmen der Gassensoren notwendig ist, unterbrochen. Anschließend werden in Block 30 die Signale der Gassensoren ausgewertet und überprüft. Wird hierbei eine Funktionsstörung festgestellt, so wird solange an den Beginn des Blocks 30 zurückgesprungen, bis die Gassensoren einen normalen Betriebszustand signalisieren. Liefern die Gassensoren dagegen in Block 30 ordnungsgemäße Signale, so wird in Block 31 das Alarmsignal zurückgesetzt und anschließend die Sicherheitsabfrage in Block 32 ordnungsgemäß beendet.

In Fig. 4 ist schließlich ein Ausführungsbeispiel für eine Brennstoffzellen-Startprozedur 25 gemäß Fig. 2 gezeigt. Nach dem Einschalten der Steuerelektronik in Block 24 wird die Startprozedur 25 in Block 33 gestartet. Hierbei wird zuerst eine Warnlampe, die eine Brennstoffzellen-Störung anzeigt, aktiviert. Außerdem wird das Ventil 3 geöffnet und eine Hinweislampe, die den Fahrer zum Purgen auffordert, eingeschaltet. Als Purgen bezeichnet man das kontrollierte Ablassen von Brennmittel, also beispielsweise von Wasserstoffgas, in die Umgebungsluft. Das Purgen ist bei Systemen, bei denen das Brennmittel in einem geschlossenen Kreislauf durch die Brennstoffzellen geführt wird, zum Beseitigen von Verunreinigungen in bestimmten Zeitabständen notwendig.

In Block 34 wird geprüft, ob der Fahrer die Aufforderung zum Purgen durch die Hinweislampe quittiert. Ist dies nicht der Fall, so wird in Block 35 überprüft, ob eine vorgegebene Zeitdauer t₂ seit dem Aktivieren der Hinweislampe verstrichen ist. Ist diese Zeitdauer t₂ noch nicht abgelaufen, so wird solange an den Beginn von Block 34 zurückgesprungen, bis entweder der Fahrer durch Quittieren den Purge-Vorgang in Block 36 auslöst, oder die vorgegebene Zeitdauer t₂ verstrichen ist. Das Purgen wird nicht automatisch gestartet, da es bei Austritt von Wasserstoffgas unter bestimmten Bedingungen zu gefährlichen Situationen kommen könnte. Beispielsweise wenn sich das Fahrzeug in einem geschlossenem Raum befindet und somit eine ausreichende Verdünnung des austretenden Wasserstoffs nicht gewährleistet ist.

In Block 37 wird dann der Anlassermotor 9, der von einer 12V-Starterbatterie 41 mit Strom versorgt wird, gestartet. Der Anlassermotor 9 treibt den Kompressor 8 an, mit dessen Hilfe Umgebungsluft in die Brennstoffzelle 1 gefördert wird. Da an der Anode der Brennstoffzelle 1 ständig Wasserstoffgas bereitsteht führt die Zufuhr von sauerstoffhaltiger Umgebungsluft zur Kathode der Brennstoffzelle 1 zum Start einer elektrochemischen Reaktion. Die bei dieser Reaktion entstehende Wärme führt dann zur Erwärmung der Brennstoffzelle 1. Beim Start ist diese Erwärmung durchaus gewünscht, da die Leistung p_{BZ} der Brennstoffzelle 1 von der Temperatur abhängig ist. Erst im Betrieb unter höheren Lasten wird es dann notwendig, die Brennstoffzelle 1 zu kühlen.

In Block 38 wird anschließend die Leistung p_{BZ} der Brennstoffzelle 1 mit einer vorgegebenen Leerlaufleistung pₘᵢₙ verglichen. Wird dabei erkannt, daß die Leerlaufleistung pₘᵢₙ bereits erreicht ist, so wird in Block 39 auf Normalbetrieb umgestellt und anschließend in Block 40 die Startprozedur beendet. Andernfalls wird solange an den Beginn von Block 38 zurückgesprungen, bis die Leerlaufleistung pₘᵢₙ erreicht ist. Bei der Umstellung auf Normalbetrieb wird der Elektromotor 10, dessen Drehzahl n von der Steuereinheit 12 mit Hilfe des Stromstellers 11 eingestellt wird, aktiviert. Anschließend wird der Anlassermotor 9 ausgeschaltet. Zusätzlich wird die Warnlampe ausgeschaltet und der Kühlkreislauf für die Brennstoffzelle 1 in Betrieb gesetzt.

## Patentansprüche

1. Fahrzeug mit elektrischer Antriebseinheit und mit einer Brennstoffzelle (1), in deren Zuführleitung ein mit Hilfe eines Elektromotors (10) angetriebener Kompressor (8) zur Verdichtung des Oxydant-Massenstromes angeordnet ist, wobei die Antriebseinheit und der Elektromotor (10) für den Kompressor (8) von der Brennstoffzelle (1) mit elektrischer Energie versorgt werden,
**dadurch gekennzeichnet,**
daß zum Antrieb des Kompressors (8) zusätzlich ein Anlassermotor(9), der von einer Starterbatterie (41) mit Spannung versorgt wird, vorgesehen ist.

2. Verfahren zum Starten eines Fahrzeugs nach Anspruch 1,
**dadurch gekennzeichnet,**
- daß nach dem Start des Verfahrens eine Sicherheitsabfrage gestartet wird,
- daß nach erfolgreicher Beendigung der Sicherheitsabfrage die Brennstoffzelle (1) mit Hilfe des Anlassermotors (9) gestartet wird, und
- daß erst dann, wenn die Brennstoffzelle (1) eine vorgegebene Leerlaufleistung (pₘᵢₙ) erreicht hat, der Elektromotor (10) aktiviert, der Anlassermotor (9) deaktiviert und die Antriebseinheit (17) freigegeben wird.

3. Verfahren nach Anspruch 2,
**dadurch gekennzeichnet,**
daß die Sicherheitsabfrage durch das Öffnen einer Fahrzeugtür gestartet wird.

4. Verfahren nach Anspruch 2,
**dadurch gekennzeichnet,**
daß die Sicherheitsabfrage solange unterbrochen wird, bis die im Fahrzeug angeordneten Gassensoren ihre Betriebstemperatur erreicht haben und daß die Sicherheitsabfrage beendet wird, sobald die Gassensoren ordnungsgemäße Signale liefern.

5. Verfahren nach Anspruch 2,
**dadurch gekennzeichnet,**
daß die Kühlwasserpumpe der Brennstoffzelle (1) erst nach Erreichen der Leerlaufleistung (pₘᵢₙ) eingeschaltet wird.

6. Verfahren nach Anspruch 2,
**dadurch gekennzeichnet,**
daß zu Beginn der Startprozedur ein Ventil (3) geöffnet und anschließend der Fahrer durch das Aktivieren einer Warnlampe zum Purgen der Abström-Leitung (13) aufgefordert wird.

7. Verfahren nach Anspruch 2,
**dadurch gekennzeichnet,**
daß ein Purge-Ventil (14) nach dem Quittieren des Warnsignals durch den Fahrer für eine vorgegebene Zeitdauer geöffnet wird.

## Claims

1. Vehicle having an electric drive unit and having a fuel cell (1) in whose feed line a compressor (8) driven with the aid of an electric motor (10) is arranged for the purpose of compressing the oxidant mass flow, the drive unit and the electric motor (10) for the compressor (8) being supplied with electrical energy from the fuel cell (1), characterized in that in order to drive the compressor (8) additional provision is made of a starter motor (9) which is supplied with voltage from a starter battery (41).

2. Method for starting a vehicle according to Claim 1, characterized
- in that a safety interrogation is started after the start of the method,
- in that after successful termination of the safety interrogation, the fuel cell (1) is started with the aid of the starter motor (9), and
- in that not until the fuel cell (1) has reached a prescribed no-load power (pₘᵢₙ) is the electric motor (10) activated, the starter motor (9) deactivated and the drive unit (17) released.

3. Method according to Claim 2, characterized in that the safety interrogation is started by opening a vehicle door.

4. Method according to Claim 2, characterized in that the safety interrogation is interrupted until the gas sensors arranged in the vehicle have reached their operating temperature, and in that the safety interrogation is terminated as soon as the gas sensors deliver regular signals.

5. Method according to Claim 2, characterized in that the cooling water pump of the fuel cell (1) is not switched on until after the no-load power (pₘᵢₙ) has been reached.

6. Method according to Claim 2, characterized in that a valve (3) is opened at the start of the starting procedure, and the driver is subsequently instructed by the activation of a warning lamp to purge the exhaust line (13).

7. Method according to Claim 2, characterized in that after acknowledgement of the warning signal by the driver a purge valve (14) is opened for a prescribed period.

## Revendications

1. Véhicule comportant une unité d'entraînement électrique et une pile à combustible (1), dans la ligne d'alimentation de laquelle est monté un compresseur (8) qui est entraîné au moyen d'un moteur électrique (10) et sert à densifier le flux massique d'un agent oxydant, l'unité d'entraînement et le moteur électrique (10) pour le compresseur (3) étant alimentés en énergie électrique par la pile à combustible (1), caractérisé en ce que pour l'entraînement du compresseur (8) il est prévu en supplément un démarreur (9), qui est alimenté en tension par une batterie de démarrage (41).

2. Procédé pour faire démarrer un véhicule selon la revendication 1, caractérisé en ce
- qu'une interrogation de sécurité est déclenchée après le démarrage du procédé,
- que, une fois que l'interrogation de sécurité s'achève avec succès, la pile à combustible (1) est mise en marche à l'aide du démarreur (9), et
- c'est seulement lorsque la pile à combustible (1) a atteint une puissance prédéterminée de marche à vide (pₘᵢₙ), que le moteur électrique (10) est activé, que le démarreur (9) est désactivé et que l'unité d'entraînement (17) est libérée.

3. Procédé selon la revendication 2, caractérisé en ce que l'interrogation de sécurité est déclenchée par l'ouverture d'une porte du véhicule.

4. Procédé selon la revendication 2, caractérisé en ce que l'interrogation de sécurité est interrompue jusqu'à ce que les détecteurs de gaz, disposés dans le véhicule, aient atteint leur température de fonctionnement, et que l'interrogation de sécurité est terminée dès que les détecteurs de gaz délivrent des signaux corrects.

5. Procédé selon la revendication 2, caractérisé en ce que la pompe à eau de refroidissement de la pile à combustible (1) n'est activée qu'une fois atteinte la puissance de marche à vide (pₘᵢₙ).

6. Procédé selon la revendication 2, caractérisé en ce qu'au début de la procédure de démarrage, une soupape (3) est ouverte et ensuite, sous l'effet de l'activation d'une lampe d'avertissement, il est demandé au conducteur de purger la canalisation d'éjection (13).

7. Procédé selon la revendication 2, caractérisé en ce qu'une soupape de purge (14) est ouverte pendant un intervalle de temps prédéterminé, après que le conducteur a accusé réception du signal d'avertissement.
